# EUROPÄISCHE PATENTANMELDUNG

(11) **EP 2 228 582 A1**
(43) Veröffentlichungstag der Anmeldung: **15.09.2010**
(21) Anmeldenummer: 09003364.8
(22) Anmeldetag: 09.03.2009
(51) Int. Cl.: F16L 37/098, F16L 37/133

(54) **Flüssigkeitshohlkörper für ein Flüssigkeitsleitungssystem**

(71) Anmelder: Georg Fischer Haustechnik AG, 8201 Schaffhausen (CH)
(72) Erfinder: Porfido, Erasmo, 8213 Stetten (CH); Heer, Peter, 79807 Lottstetten (DE); Breyer, Markus, 78315 Radolfzell (DE); Bamberger, Michael, 78262 Gaillingen (DE)
(74) Vertreter: Weiss, Wolfgang

(57) **Zusammenfassung**

Die Erfindung betrifft einen als Flüssigkeitsverteiler (1) ausgebildeten Flüssigkeitshohlkörper für ein Flüssigkeitsleitungssystem, insbesondere ein Trinkwasserleitungssystem, mit einem hohlen Grundkörper (2), der eine Einlaufstelle (3), eine Auslauf- oder Verschlussstelle (4) und mindestens einen Verteilerabgang (5,6) aufweist. Es ist vorgesehen, dass die Einlaufstelle (3) und/oder die Auslauf- oder Verschlussstelle (4) über ein Kupplungsglied (8) mit einem Anschlusselement (9) kuppelbar ist, wobei das Kupplungsglied (8) erste Kupplungsmittel (15) zum Kuppeln mit dem Grundkörper (2) und zweite Kupplungsmittel (17) zum Kuppeln mit dem Anschlusselement (9) aufweist, und mindestens eines der Kupplungsmittel (15,17) von einem elastisch aufweitbaren, geschlitzten Ring (13) gebildet ist, der durch Aufweiten in eine Ringnut (29) des Grundkörpers (2) und/oder des Anschlusselements (9) eingesetzt und dort formschlüssig angeordnet ist.

## Beschreibung

Die Erfindung betrifft einen Flüssigkeitshohlkörper für ein Flüssigkeitsleitungssystem, insbesondere ein Trinkwasserleitungssystem, mit einem hohlen Grundkörper, der eine Einlaufstelle und eine Auslauf- oder Verschlussstelle aufweist.

Ein als Flüssigkeitsverteiler ausgebildeter Flüssigkeitshohlkörper der eingangs genannten Art ist bekannt. Er ist aus einer Messinglegierung gefertigt. Um an ihn eine Leitung oder einen weiteren Flüssigkeitsverteiler anzuschließen, müssen entsprechende Gewinde der zu verbindenden Teile mit Dichtmittel versehen und dann miteinander verschraubt werden. Die Installationsarbeiten sind daher sehr aufwendig.

Der Erfindung liegt daher die Aufgabe zugrunde, einen Flüssigkeitshohlkörper für ein Flüssigkeitsleitungssystem zu schaffen, der sehr einfach und zeitsparend installiert werden kann und eine einfache Konstruktion aufweist.

Diese Aufgabe wird erfindungsgemäß dadurch gelöst, dass die Einlaufstelle und/oder die Auslauf- oder Verschlussstelle über ein Kupplungsglied mit einem Anschlusselement kuppelbar ist, wobei das Kupplungsglied erste Kupplungsmittel zum Kuppeln mit dem Grundkörper und zweite Kupplungsmittel zum Kuppeln mit dem Anschlusselement aufweist, und mindestens eines der Kupplungsmittel von einem elastisch aufweitbaren, geschlitzten Ring gebildet ist, der durch Aufweiten in eine Ringnut des Grundkörpers und/oder des Anschlusselements eingesetzt und dort formschlüssig angeordnet ist. Demzufolge ist das Kuppeln des Flüssigkeitshohlkörpers mit dem Anschlusselement über das erwähnte Kupplungsglied möglich, wobei als Kupplungsmittel ein elastisch aufweitbarer, geschlitzter Ring verwendet wird, der durch einfaches Aufweiten in eine Ringnut des Grundkörpers und/oder des Anschlusselements eingesetzt werden kann und dort formschlüssig gehalten wird. Dies bedeutet, dass aufwendige Gewindeverbindungen vermieden sind. Durch einfaches Aufweiten des Rings und Einsetzen in die Ringnut, in der sich der Ring aufgrund seiner Elastizität wieder zusammenzieht, ist eine formschlüssige Verbindung geschaffen, sodass das Kupplungsglied sicher gehalten ist. Damit ist das Kupplungsglied an einem der miteinander zu verbindenden Bauteile festgelegt. Um auch eine sichere Verbindung zu dem anderen der miteinander zu verbindenden Bauteile zu schaffen, ist ein weiteres Kupplungsmittel vorgesehen. Dies kann vorzugsweise als Rastmittel ausgebildet sein, das heißt durch axiales Zuführen des entsprechend zu verbindenden Bauteils erfolgt ein Verrasten dieses Bauteils mit dem Kupplungsglied. Sofern die Anordnung derart getroffen ist, dass durch axiales Aufstecken des Ringes auf das entsprechende Bauteil ein Aufweiten des Ringes erfolgt und durch weiteres axiales Verschieben der Ring in die Ringnut unter Verringerung seines Durchmessers einrastet, ist auch in diesem Falle ein Verrasten von Kupplungsglied und dem mit Ringnut versehenen Bauteil gegeben. In jedem Falle ist die Kupplung des Kupplungsglieds mit dem entsprechenden Bauteil aufgrund der Ring-Ringnut-Verbindung sehr einfach und dennoch sicher möglich.

Besonders bevorzugt ist, wenn die ersten Kupplungsmittel als - wie bereits erläutert - geschlitzter Ring und die zweiten Kupplungsmittel als Rastelemente, insbesondere Rasthaken, ausgebildet sind. Hierbei wirkt der Ring mit der erwähnten Ringnut zusammen und die Rastelemente, insbesondere Rasthaken, können in entsprechende Rastvertiefungen des zugehörigen Bauteils eingreifen.

Nach einer Weiterbildung der Erfindung ist vorgesehen, dass die Rasthaken in Richtung einer Längsachse des Grundkörpers axial verlaufen. Demzufolge lassen sich die Einlaufstelle und/oder die Auslauf- oder Verschlussstelle über das Kupplungsglied mit dem Anschlusselement durch axiales Aufeinanderzuführen rastend verbinden.

Damit ein Einrasten der Rasthaken in entsprechende Rastvertiefungen erfolgen kann, sind die Rasthaken für ein radiales elastisches Einfedern oder Ausfedern ausgebildet. Dies bedeutet, dass sie beim Zusammenstecken der Bauteile radial elastisch einfedern oder ausfedern, bis die Rasthaken in die Rastvertiefungen gelangen, wo sie radial wieder ausfedern oder einfedern und dadurch den jeweiligen Hintergriff schaffen.

Das Kupplungsglied ist vorzugsweise einstückig ausgebildet. Dies bedeutet, dass nur ein einziges Bauteil für die Verbindungsaufgabe der Einlaufstelle und/oder der Auslauf- oder Verschlussstelle mit dem Anschlusselement benötigt wird. Das Kupplungsglied ist vorzugsweise aus Kunststoff hergestellt.

Bei dem Anschlusselement kann es sich um einen Hohlkörper handeln. Beispielsweise um einen Flüssigkeitsverteiler, sodass der Flüssigkeitshohlkörper mit einem Flüssigkeitsverteiler gekuppelt wird. Es ist selbstverständlich auch denkbar, dass das als Hohlkörper ausgebildete Anschlusselement eine Anschlussverschraubung oder ein Anschlussadapter, insbesondere zum Anschluss eines Flüssigkeitsverteilers, ist. Eine derartige Anschlussverschraubung wird demzufolge über das Kupplungsglied mit dem Flüssigkeitshohlkörper auf einfache Art und Weise, insbesondere rastend verbunden. Unter "Anschlussverschraubung" ist ein Element mit Gewinde versehen, an das beispielsweise eine Rohrleitung angeschlossen werden kann. Denkbar ist jedoch auch, dass der erwähnte Anschlussadapter zum Einsatz kommt. Hierbei handelt es sich um ein Verbindungselement, an dem durch einfaches axiales Rastaufschieben weitere Elemente, wie ein Rohr oder einen Flüssigkeitsverteiler, kommunizierend angeschlossen werden kann. Alternativ kann das Anschlusselement auch als Verschlusselement ausgebildet sein, das heißt, an dem Flüssigkeitshohlkörper soll kein weiteres Hohlkörperbauteil, sondern das Verschlusselement in der Art einer Verschlusskappe angeschlossen werden. Diese Verschlusskappe kann vorzugsweise durch einfaches axiales Aufschieben und Verrasten flüssigkeitsdicht gehalten sein.

Nach einer Weiterbildung der Erfindung ist vorgesehen, dass das Kupplungsglied mindestens eine Verdrehsicherung zum drehfesten Anordnen an dem Grundkörper und/oder dem Anschlusselement aufweist. Hierdurch ist sichergestellt, dass eine Relativdrehung zwischen Flüssigkeitshohlkörper und angeschlossenem Anschlusselement nicht möglich ist. Dies ist insbesondere dann von Bedeutung, wenn der Grundkörper und/oder das Anschlusselement ein nicht rotationssymmetrisches Bauteil ist, beispielsweise ein Flüssigkeitsverteiler, wobei dessen Verteilerabgänge eine vorgegebene Winkelstellung einnehmen sollen.

Insbesondere ist vorgesehen, dass eine Verdrehsicherung von dem zweiten Kupplungsmittel gebildet ist. Bei dem zweiten Kupplungsmittel handelt es sich um die Rasthaken, die mit den Rastvertiefungen zusammenwirken. Sofern die Rastvertiefungen radiale Begrenzungen aufweisen, lassen sich die Rasthaken in den Rastvertiefungen nicht in Umfangsrichtung verlagern, wodurch die Verdrehsicherung geschaffen ist. Zusätzlich oder alternativ ist es auch denkbar, dass zumindest einer der Rasthaken in einen axialen Führungskanal beim axialen Zusammenführen der Teile eingeschoben wird, wobei der Führungskanal eine Verdrehung der Teile relativ zueinander verhindert.

Ferner ist vorzugsweise eine oder eine weitere Verdrehsicherung von mindestens einem vom Ring oder vom zweiten Kupplungsmittel ausgehenden Axialsteg gebildet. Der Axialsteg greift bevorzugt in eine Verdrehsicherungsvertiefung am Grundkörper und/oder Anschlusselement ein, sodass der Ring in der Ringnut nicht verdreht werden kann. Dieser Axialsteg kann ferner derart ausgebildet sein, dass er nicht nur in eine Verdrehsicherungsvertiefung des Bauteils eingreift, an dem sich die Ringnut befindet, sondern ferner auch in eine Verdrehsicherungsvertiefung des Bauteils hineinragt, das mit dem Bauteil verbunden wird, das die Ringnut besitzt. Demzufolge liegt dann eine doppelte Verdrehsicherung mittels des erwähnten Axialsteges vor.

Nach einer Weiterbildung der Erfindung ist vorgesehen, dass die Rasthaken vom Ring in eine erste axiale Richtung weisend ausgehen und dass der Axialsteg vom Ring und/oder vom zweiten Kupplungsmittel in eine zweite axiale Richtung weisend ausgeht, die entgegengesetzt zur ersten axialen Richtung verläuft. Rasthaken und Axialsteg weisen somit in entgegengesetzte Richtungen.

Schließlich kann vorgesehen sein, dass der Flüssigkeitshohlkörper als Flüssigkeitsverteiler mit mindestens einem Verteilerabgang ausgebildet ist.

Die Zeichnungen veranschaulichen die Erfindung anhand von Ausführungsbeispielen, und zwar zeigt:
- Figur 1: eine perspektivische Ansicht eines als Flüssigkeitsverteilers ausgebildeten Flüssigkeitshohlkörper mit einem Kupplungsglied und einem Anschlusselement in Explosionsdarstellung,
- Figur 2: einen Endbereich des Flüssigkeitsverteilers der Figur 1 mir dort angeordnetem Kupplungsglied,
- Figur 3: das Kupplungsglied,
- Figur 4: einen Endbereich eines Flüssigkeitsverteilers mit daran angeordnetem Kupplungsglied sowie einen weiteren Flüssigkeitsverteiler, wobei die beiden Flüssigkeitsverteiler noch nicht miteinander gekuppelt sind,
- Figur 5: eine der Figur 4 entsprechende Darstellung, jedoch im Schnitt,
- Figur 6: die Anordnung der Figur 4, jedoch in Kuppelstellung,
- Figur 7: ein mit dem Flüssigkeitsverteiler über das Kupplungsglied gekuppeltes Anschlusselement,
- Figur 8: ein mit dem Flüssigkeitsverteiler über das Kupplungsglied gekuppeltes, weiteres Anschlusselement,
- Figur 9: ein mit dem Flüssigkeitsverteiler über das Kupplungsglied gekuppeltes, weiteres Anschlusselement,
- Figur 10: ein mit dem Flüssigkeitsverteiler über das Kupplungsglied gekuppeltes, weiteres Anschlusselement und
- Figur 11: ein zweites Ausführungsbeispiel des Kupplungsgliedes ähnlich Figur 3.

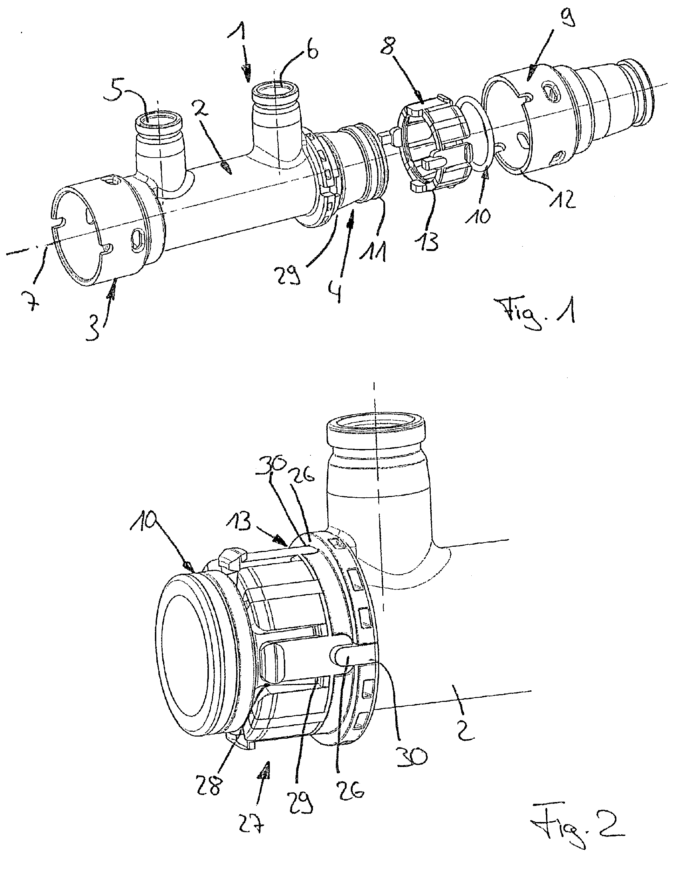

Die Figur 1 zeigt einen als Flüssigkeitsverteiler 1 ausgebildeten Flüssigkeitshohlkörper. Dieser weist einen hohlen Grundkörper 2 auf, der rohrförmig gestaltet ist. In Abhängigkeit von einer Flüssigkeitsdurchströmungsrichtung weist der Grundkörper eine Einlaufstelle 3 und eine Auslaufstelle 4 auf. Über seine Länge ist der Grundkörper 2 mit zwei Verteilerabgängen 5, 6 versehen, die kommunizierend mit dem Innern des hohlen Grundkörpers 2 in Verbindung stehen. Der Grundkörper 2 weist eine Längsachse 7 auf. In Richtung dieser Längsachse 7 kann ein Kupplungsglied 8 dem Grundkörper 2 zugeführt und an diesem festgelegt werden. Hierauf wird nachstehend näher eingegangen. Ferner kann ein Anschlusselement 9 - ebenfalls in Richtung der Längsachse 7 - dem Kupplungsglied 8 sowie dem Grundkörper 2 zugeführt werden, wobei das Kupplungsglied 8 dazu dient, die beiden Bauteile (Grundkörper 2 sowie Anschlusselement 9) miteinander zu kuppeln. Um einen Flüssigkeitsaustritt im Bereich der Kupplungsstelle zu vermeiden, ist ein Dichtring 10 vorgesehen, der in eine Dichtungsnut 11 des Grundkörpers eingelegt wird und mit seiner äußeren Peripherie an einer Innenwand 12 des rohrförmigen, hohlen Anschlusselements 9 dichtend anliegt.

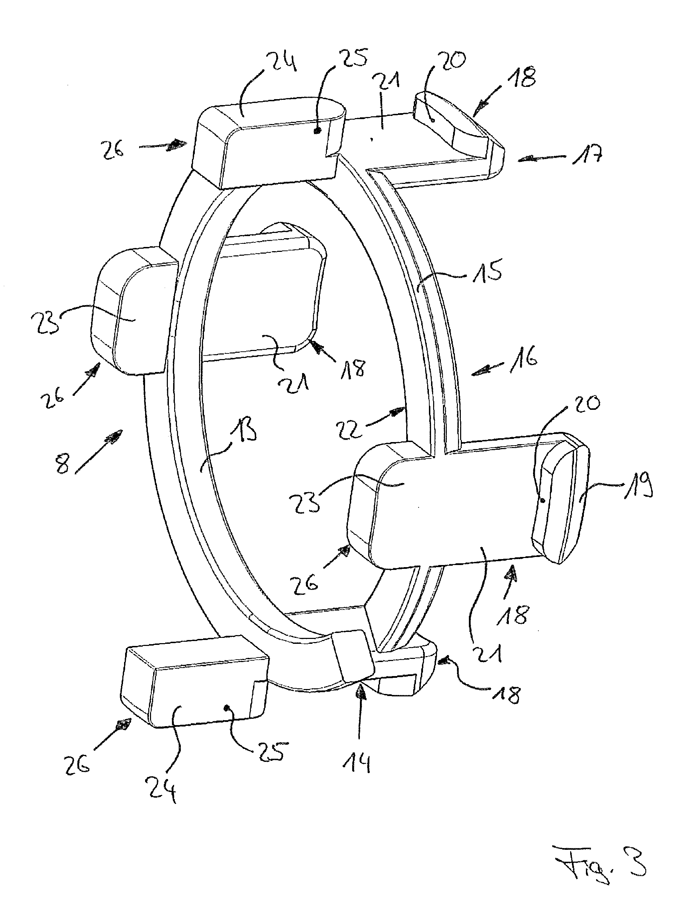

Gemäß Figur 3 weist das Kupplungsglied 8 einen Ring 13 auf, der kreisförmig ausgebildet ist und im Wesentlichen ein rechteckiges Querschnittsprofil besitzt. Der Ring 13 ist nicht geschlossen, sondern weist einen Schlitz 14 auf und besteht aus elastischem Material, vorzugsweise aus Kunststoff. Durch das elastische Material lässt sich der geschlitzte Ring 13 aufweiten, wodurch sich sein freier Innendurchmesser vergrößern lässt. Der Ring 13 bildet aufgrund seiner Aufweitbarkeit erste Kupplungsmittel 15. Von einer Seite 16 des Rings 13 gehen zweite Kupplungsmittel 17 in Form von mehreren, über den Umfang des Rings verteilt angeordneten Rasthaken 18 aus. Beim dargestellten Ausführungsbeispiel der Figur 3 sind vier Rasthaken 18 gleichmäßig winkelbeabstandet (90°) vorgesehen. Die Rasthaken 18 erstrecken sich von der Seite 16 des Rings 13 weg, wobei sie senkrecht zur Ebene des Ringes 13 verlaufen. Jeder Rasthaken 18 besitzt eine Auflaufschräge 19 und eine sich daran anschließende Rastschulter 20 und einen Stegbereich 21. Bei zwei, einander diametral gegenüberliegenden Rasthaken 18 verläuft der Steg 21 bis über die andere Seite 22 des Ringes 13 mit einem Abschnitt 23 hinaus. Bei den anderen beiden, ebenfalls einander diametral gegenüberliegenden Rasthaken 18 ist auf der Seite 22 des Rings 13 ebenfalls eine Art Verlängerung ausgebildet, und zwar jeweils als Abschnitte 24, die sich gegenüber den Abschnitten 23 dadurch unterscheiden, dass sie bis über den Außendurchmesser des Rings 13 mit einer oberen Zone 25 hinausragen. Die Abschnitte 23 und Abschnitte 24 bilden Axialstege 26. Der Ring 13 ist mit den vorstehend aufgeführten Bestandteilen einstückig ausgebildet und besteht vorzugsweise - wie gesagt - aus Kunststoff.

Gemäß Figur 2 weist der Grundkörper 2 eine Ringaufnahmezone 27 auf, die einen radial innenliegenden Freiraum 28 für die Rasthaken 18, eine Ringnut 29 und mehrere Verdrehsicherungsvertiefungen 30 aufweist, welche axial verlaufen.

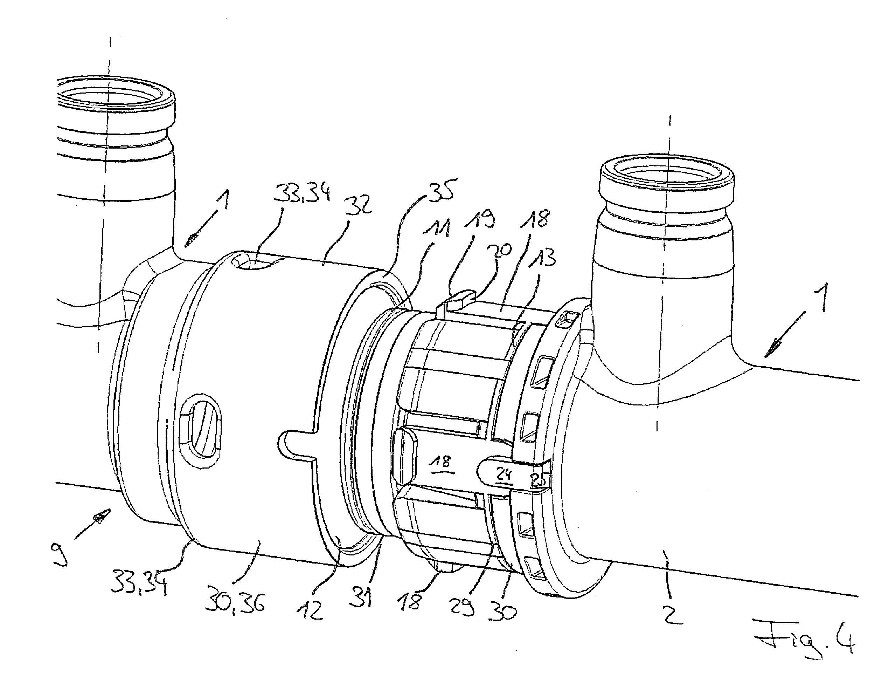

Um den Ring 13 aus seiner in der Figur 1 dargestellten Position in die in der Figur 2 gezeigte Position zu bringen, wird dieser aufgeweitet, axial über den Grundkörper 2 des Flüssigkeitsverteilers 1 geschoben, bis er im Bereich der Ringaufnahmezone 27 liegt. Hier zieht er sich aufgrund seiner Elastizität zusammen, derart, dass er in die Ringnut 29 eingreift, sodass er dort in axialer Richtung formschlüssig angeordnet ist. In dieser Position treten die Axialstege 26 in die formpassend ausgebildeten Verdrehsicherungsvertiefungen 30, sodass der Ring 13 drehfest und auch axialfest an dem Grundkörper 2 festgelegt ist. Diese Situation ist nochmals deutlich in der Figur 4 dargestellt. Es ist erkennbar, dass sich ein Abschnitt 31 des Grundkörpers 2 axial über die Rasthaken 18 des Rings 13 hinaus erstreckt und dort die Dichtungsnut 11 aufweist, in die der Dichtring 10 einlegbar ist. Ferner ist dort erkennbar, dass ein Anschlusselement 9, das in diesem Falle als weiterer Flüssigkeitsverteiler 1 ausgebildet ist, mit einer übergreifenden Kupplungszone 32 axial auf den Grundkörper 2 des erstgenannten Flüssigkeitsverteilers 1 zum flüssigkeitsdichten Kuppeln aufgeschoben werden kann. Hierzu weist die rohrförmige Kupplungszone 32 über ihren Umfang Rastvertiefungen 33 in Form von Rastdurchbrüchen 34 auf. Ferner besitzt die Kupplungszone 32 endseitig Verdrehsicherungsvertiefungen 30, die als zum Stirnrand 35 randoffene Verdrehsicherungsdurchbrüche 36 ausgebildet sind. Beim axialen Zusammenführen der beiden Flüssigkeitsverteiler 1 (Figur 4) läuft die Innenwand 12 der rohrförmigen Kupplungszone 32 auf die Auflaufschrägen 19 der Rasthaken 18 auf, sodass diese radial einwärts federn. Im Zuge des weiteren axialen Zusammenschiebens der beiden Flüssigkeitsverteiler 1 treten die Rastschultern 20 in die Rastdurchbrüche 34 ein, wodurch die Rasthaken 18 aufgrund der Eigenelastizität des Materials des Rings 13 radial nach außen treten, sodass die Rastschultern 18 entsprechende Ränder der Rastdurchbrüche 34 hintergreifen. In dieser Stellung sind die Verdrehsicherungsdurchbrüche 36 in die oberen Zonen 25 der beiden Abschnitte 24 eingetreten, sodass hierdurch eine Verdrehsicherung zwischen dem in der Figur 4 links dargestellten Flüssigkeitsverteiler 1 und dem Ring 13 hergestellt ist. Eine entsprechende Verdrehsicherung des Rings 13 gegenüber dem auf der rechten Seite der Figur 4 dargestellten Flüssigkeitsverteilers 1 ist dadurch gegeben, dass die Abschnitte 24, insbesondere die oberen Zonen 25, in den Verdrehsicherungsvertiefungen 30 des Grundkörpers 1 einliegen. Aufgrund der Verdrehsicherungen lassen sich die Bauteile nur in 0°-Position und in 180°-Position zusammenfügen.

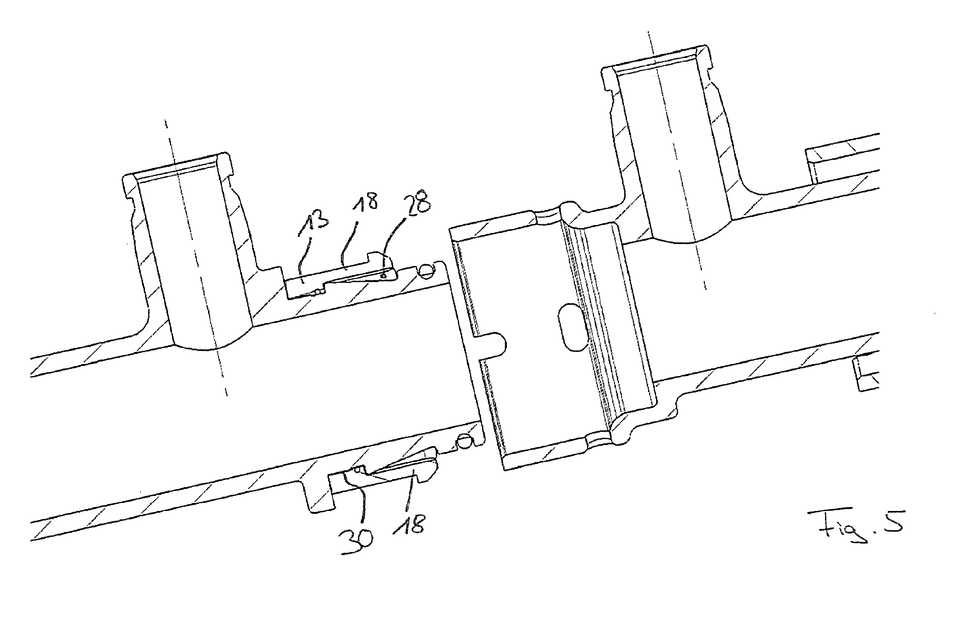

Die Figur 5 verdeutlicht die Situation der Figur 4 nochmals in Schnittansicht, wobei erkennbar ist, dass unterhalb der Rasthaken 18 der Freiraum 28 als Ringkeilraum ausgebildet ist, um ein radiales Ein- und Ausfedern der Rasthaken 18 zu erlauben.

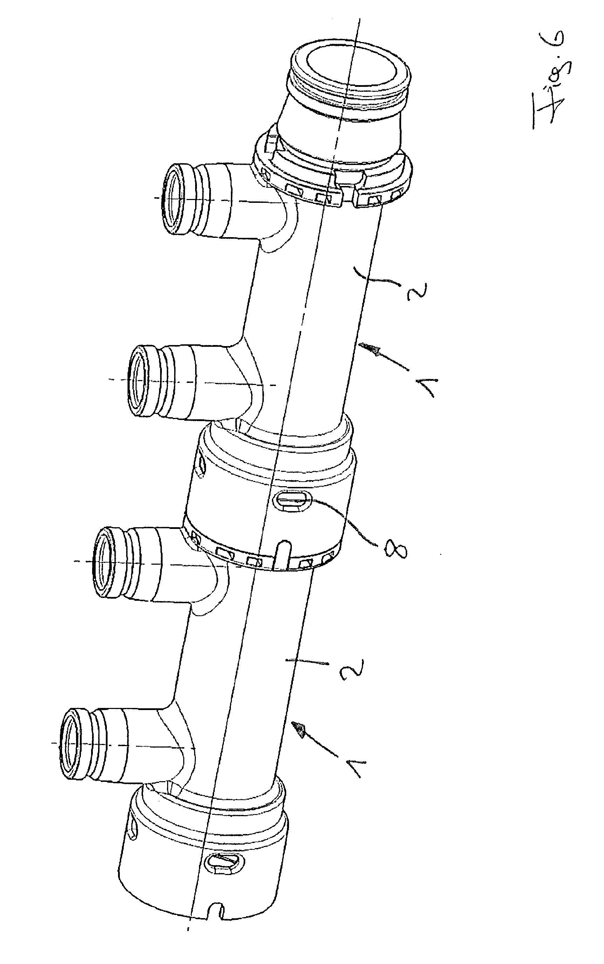

Die Figur 6 zeigt die beiden Flüssigkeitsverteiler 1 im axial vollständig verrasteten Zustand. Es wird deutlich, dass auf diese Art und Weise mehrere Flüssigkeitsverteiler 1 axial miteinander gekuppelt werden können.

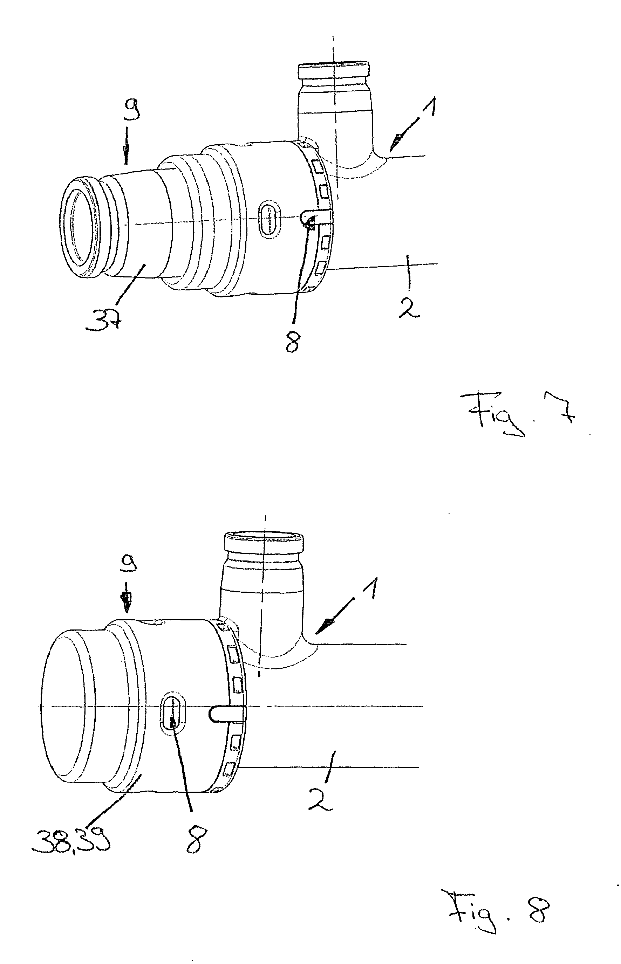

Gemäß Figur 7 ist - wie auch bereits in Figur 1 gezeigt - ein tüllenförmiges Anschlusselement 9 mittels des Kupplungsglieds 8 am Grundkörper 2 eines Flüssigkeitsverteilers 1 rastend festgelegt. Bei diesem Anschlagelement 9 handelt es sich um einen Anschlussadapter 37, an dem weitere Bauteile kommunizierend angeschlossen werden können.

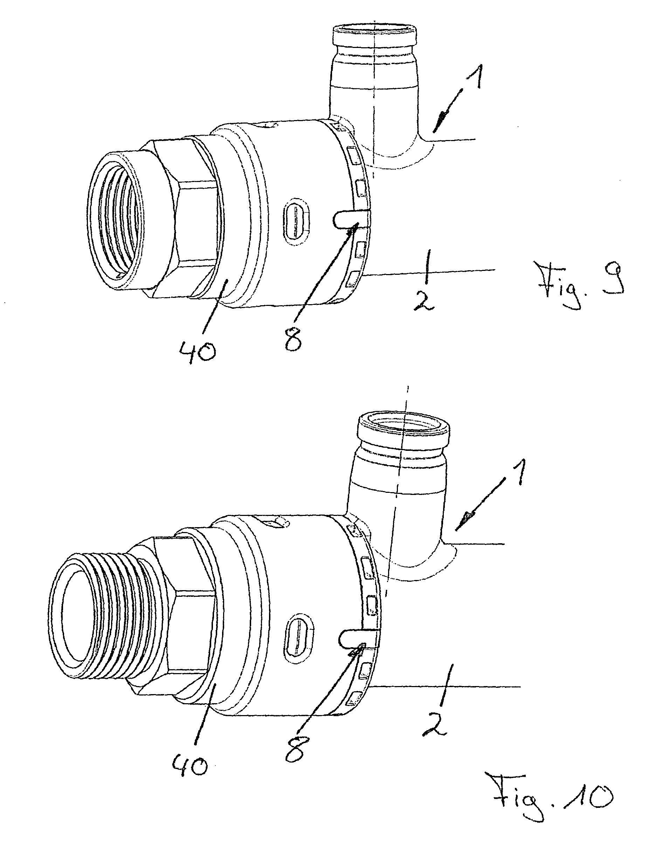

Gemäß Figur 8 ist auf entsprechende Art und Weise am Grundkörper 2 des Flüssigkeitsverteilers 1 ein Anschlusselement 9 festgelegt, das als Verschlusselement 38, insbesondere als Verschlusskappe 39, ausgebildet ist. Die Figuren 9 und 10 zeigen, dass mittels des Kupplungsglieds 8 unterschiedlich gestaltete Anschlussverschraubungen 40 mit dem Grundkörper 2 des Flüssigkeitsverteilers 1 verbunden werden können. Die Anschlussverschraubung 40 der Figur 9 weist ein Innengewinde und die Anschlussverschraubung 40 der Figur 10 ein Außengewinde auf. Mit den entsprechenden Gewinden können andere flüssigkeitsführende Bauteile verbunden werden.

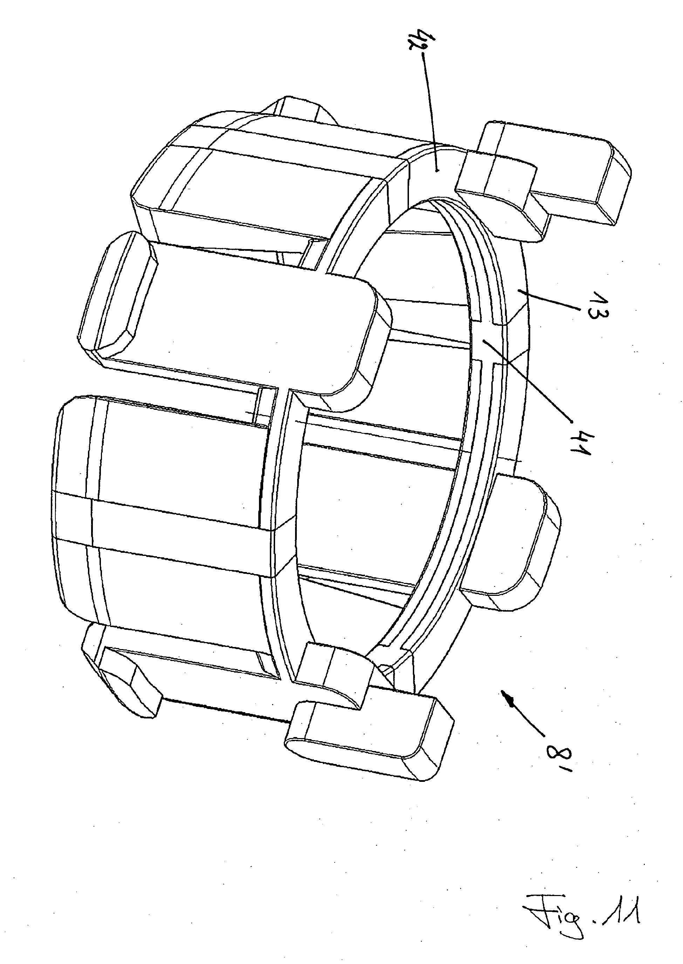

Die Figur 11 zeigt ein zweites Ausführungsbeispiel des Kupplungsgliedes 8'. In Figur 11 ist der Ring 13 nicht geschlitzt, sondern aus zwei Komponenten, nämlich Kunststoff und Elastomer hergestellt. Der Ring 13 besteht aus einem Ringkörper 41 aus Elastomer und aus vier Ringsegmenten 42 aus Kunststoff, die um den Ringkörper 41 überextrudiert werden.

## Patentansprüche

1. Flüssigkeitshohlkörper für ein Flüssigkeitsleitungssystem, insbesondere ein Trinkwasserleitungssystem, mit einem hohlen Grundkörper, der eine Einlaufstelle und eine Auslauf- oder Verschlussstelle aufweist, **dadurch gekennzeichnet, dass** die Einlaufstelle (3) und/oder die Auslauf- oder Verschlussstelle (4) über ein Kupplungsglied (8) mit einem Anschlusselement (9) kuppelbar ist, wobei das Kupplungsglied (8) erste Kupplungsmittel (15) zum Kuppeln mit dem Grundkörper (2) und zweite Kupplungsmittel (17) zum Kuppeln mit dem Anschlusselement (9) aufweist, und mindestens eines der Kupplungsmittel (15,17) von einem elastisch aufweitbaren, geschlitzten Ring (13) gebildet ist, der durch Aufweiten in eine Ringnut (29) des Grundkörpers (2) und/oder des Anschlusselements (9) eingesetzt und dort formschlüssig angeordnet ist.

2. Flüssigkeitshohlkörper nach Anspruch 1, **dadurch gekennzeichnet, dass** die ersten und/oder die zweiten Kupplungsmittel (15,17) als Rastmittel ausgebildet sind.

3. Flüssigkeitshohlkörper nach einem der vorhergehenden Ansprüche, **dadurch gekennzeichnet, dass** die ersten Kupplungsmittel (15) als der geschlitzte Ring (13) und dass die zweiten Kupplungsmittel (17) als Rastelemente, insbesondere Rasthaken (18), ausgebildet sind.

4. Flüssigkeitshohlkörper nach einem der vorhergehenden Ansprüche, **dadurch gekennzeichnet, dass** die Rasthaken (18) mit Hintergriff in Rastvertiefungen (33) von Grundkörper (2) und/oder Anschlusselement (9) eingreifen.

5. Flüssigkeitshohlkörper nach einem der vorhergehenden Ansprüche, **dadurch gekennzeichnet, dass** die Rasthaken (18) in Richtung einer Längsachse (7) des Grundkörpers (2) axial verlaufen.

6. Flüssigkeitshohlkörper nach einem der vorhergehenden Ansprüche, **dadurch gekennzeichnet, dass** die Rasthaken (18) für ein radiales elastisches Einfedern oder Ausfedern ausgebildet sind.

7. Flüssigkeitshohlkörper nach einem der vorhergehenden Ansprüche, **dadurch gekennzeichnet, dass** das Kupplungsglied (8) einstückig ausgebildet ist.

8. Flüssigkeitshohlkörper nach einem der vorhergehenden Ansprüche, **dadurch gekennzeichnet, dass** das Kupplungsglied (8) aus Kunststoff besteht.

9. Flüssigkeitshohlkörper nach einem der vorhergehenden Ansprüche, **dadurch gekennzeichnet, dass** das Anschlusselement (9) ein Hohlkörper ist.

10. Flüssigkeitshohlkörper nach einem der vorhergehenden Ansprüche, **dadurch gekennzeichnet, dass** das Anschlusselement (9) ein Verschlusselement (38) ist.

11. Flüssigkeitshohlkörper nach einem der vorhergehenden Ansprüche, **dadurch gekennzeichnet, dass** das Anschlusselement (9) ein Flüssigkeitsverteiler (1) ist.

12. Flüssigkeitshohlkörper nach einem der vorhergehenden Ansprüche, **dadurch gekennzeichnet, dass** das Anschlusselement (9) eine Anschlussverschraubung (40) oder ein Anschlussadapter (37), insbesondere zum Anschluss eines Flüssigkeitsverteilers (1), ist.

13. Flüssigkeitshohlkörper nach einem der vorhergehenden Ansprüche, **dadurch gekennzeichnet, dass** das Kupplungsglied (8) mindestens eine Verdrehsicherung zum drehfesten Anordnen an dem Grundkörper (2) und/oder dem Anschlusselement (9) aufweist.

14. Flüssigkeitshohlkörper nach einem der vorhergehenden Ansprüche, **dadurch gekennzeichnet, dass** eine Verdrehsicherung von dem zweiten Kupplungsmittel (17) gebildet ist.

15. Flüssigkeitshohlkörper nach einem der vorhergehenden Ansprüche, **dadurch gekennzeichnet, dass** eine oder eine weitere Verdrehsicherung von mindestens einem vom Ring (13) und/oder vom zweiten Kupplungsmittel (17) ausgehenden Axialsteg (26) gebildet ist.

16. Flüssigkeitshohlkörper nach einem der vorhergehenden Ansprüche, **dadurch gekennzeichnet, dass** der Axialsteg (26) in eine Verdrehsicherungsvertiefung (30) vom Grundkörper (2) und/oder Anschlusselement (9) eingreift.

17. Flüssigkeitshohlkörper nach einem der vorhergehenden Ansprüche, **dadurch gekennzeichnet, dass** die Rasthaken (18) vom Ring (13) in eine erste axiale Richtung weisend ausgehen und dass der Axialsteg (26) vom Ring (13) und/oder vom zweiten Kupplungsmittel (17) in eine zweite axiale Richtung weisend ausgeht, die entgegengesetzt zur ersten axialen Richtung verläuft.

18. Flüssigkeitshohlkörper nach einem der vorhergehenden Ansprüche, **gekennzeichnet durch** die Ausbildung als Flüssigkeitsverteiler (1) mit mindestens einem Verteilerabgang (5,6).
